Europäisches Patentamt

European Patent Office

Office européen des brevets

(19)

(11) **EP 0 905 532 A2**

(12) **EUROPÄISCHE PATENTANMELDUNG**

(43) Veröffentlichungstag:
31.03.1999 Patentblatt 1999/13

(51) Int. Cl.$^6$: **G02B 5/30**, G02F 1/141

(21) Anmeldenummer: 98116967.5

(22) Anmeldetag: 08.09.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 25.09.1997 DE 19742241

(71) Anmelder:
SIEMENS AKTIENGESELLSCHAFT
80333 München (DE)

(72) Erfinder:
Noé, Reinhold, Prof. Dr.-Ing.
33100 Paderborn (DE)

(54) **Polarisationstransformator mit Wellenplatten konstanter Verzögerung und einstellbarer Eigenmoden**

(57) Polarisationstransformator (1) zur vorzugsweise endlosen Transformation des Polarisationszustands einer optischen Welle (2), in dem Polarisationsstellelemente (11, 13, 15, 17, 19) mit Polarisationsdrehung oder zirkularer Doppelbrechung, in mindestens einem Fall bestehend aus mehreren Halbwellenelementen (111, 112, 113, 114), abwechselnd mit Viertelwellenelementen (12, 14, 16, 18) kaskadiert sind. Die Elemente sind vorzugsweise ferroelektrische Flüssigkristallzellen, welche eine feste Verzögerung zwischen den linear polarisierten Eigenmoden aufweisen, deren Eigenmodenorientierung dagegen durch eine angelegte Spannung in einem kleinen Verstellwinkelbereich von beispielsweise ±π/8 verändert werden kann.

Figur 1

EP 0 905 532 A2

## Beschreibung

Die Erfindung betrifft einen Polarisationstransformator, mit dem die Polarisation einer elektromagnetischen, vorzugsweise optischen Welle verändert werden kann.

Polarisationstransformatoren dienen der Transformation eines Polarisationszustands einer elektromagnetischen, vorzugsweise optischen Welle in einen anderen. Jeder der beiden Polarisationszustände kann, aber muß nicht variabel sein. In der optischen Übertragungstechnik kommen wegen langer Lichtwellenleiter-Übertragungsstrecken oft große nachzuverfolgende oder zu erzeugende Polarisationsänderungen vor.

Beispielsweise kann die Einstellung einer Hauptpolarisation (principal state-of-polarization) eines Lichtwellenleiters die Auswirkungen von Polarisationsmodendispersion zu Null machen. Die Hauptpolarisationen können aber im Laufe der Zeit beliebig, potentiell endlos wandern. Eine andere Möglichkeit zur Unschädlichmachung von Polarisationsmodendispersion ist das empfängerseitige Einfügen eines Polarisationstransformators mit ggf. angeschlossenem, der Strecke entgegenwirkendem polarisationsdispersivem Element, wobei wiederum beliebige, potentiell endlose Polarisationsänderungen nachzuverfolgen sind.

In IEEE J. Lightwave Techn., 9(1991)10, S. 1353-1366 und in dort genannten Literaturstellen sind Möglichkeiten genannt, beliebig große Polarisationsänderungen unterbrechungsfrei zu erzeugen oder nachzuverfolgen. Dies geschieht durch eine Endlos-Polarisationsregelung, welche einen Endlos-Polarisationstransformator enthält.

Nachteile von Polarisationstransformatoren, auch Endlos-Polarisationstransformatoren, die in verschiedenen Technologien hergestellt wurden, sind Drift und Kopplungsverluste (bei Lithiumniobat), fehlende Robustheit (bei Faserquetschern), zu großes Volumen (bei Faserstreckern), zu langsame Ansprechgeschwindigkeit (bei nematischen Flüssigkristallen und bei drehbaren Wellenplatten). Es gibt jedoch ferroelektrische Flüssigkristallzellen, welche wie drehbare Wellenplatten mit fester Verzögerung zwischen den beiden linear polarisierten Eigenmoden wirken. Der Verstellwinkel ist durch eine angelegte elektrische Spannung vorzugsweise kontinuierlich einstellbar, bei Schaltzeiten, die zwischen etwa 1 und 100 Mikrosekunden liegen können. Beispiele wurden in den Phys. Rev. Lett., Band 38, S. 848 (1977) und in Liquid Crystals, Band 5, S. 1171 (1989) veröffentlicht. Die erreichbaren Verstellwinkel betragen in der Regel weniger als $\pm\pi/4$ gegenüber einem Mittelwert.

Während kontinuierlich drehbare Wellenplatten zur Konstruktion eines Endlos-Polarisationstransformators ohne weiteres geeignet sind, ist dies bei beschränkt drehbaren Wellenplatten, und als solche arbeiten die genannten ferroelektrischen Flüssigkristallzellen, nicht ohne weiteres möglich. Eine mögliche Anordnung wurde im IEEE J. Lightwave Techn., 8(1990)3, S. 438-458 in Abschnitt V., insbesondere V.B. und Fig. 17, vorgestellt. Der dort notwendige Verstellwinkelbereich beträgt jedoch gegenüber einem Mittelwert mindestens $\pm\pi/2$. So große oder gar sicherheitshalber noch größer gewählte Verstellwinkel sind durch ferroelektrische Flüssigkristallzellen aber nicht realisierbar. Außerdem ist die insgesamt erforderliche, für Einfügedämpfung mitverantwortliche Gesamtverzögerung dort sehr groß.

Ein Endlos-Polarisationstransformator mit Redundanz, welcher nichtideales Verhalten seiner Polarisationsstellglieder oder Abweichungen von etwa vorgegebenen Eingangs- oder Ausgangspolarisationen stets zu kompensieren in der Lage ist, wurde für beschränkt drehbare Wellenplatten nicht angegeben.

In IEEE J. Quantum Electron. QE-18, No. 4, S. 767-771, 1982 ist die Erzielung einer großen Verzögerung durch Kaskadierung quasi unendlich vieler Retarder mit kleinen Verzögerungen und in Längsrichtung periodisch aber stetig modulierten Eigenmoden dargestellt. Mit Ausnahme des in diesem Fall verwendeten Materialsystems Lithiumniobat sind stetig modulierte Eigenmoden und große Retarderzahlen, beispielsweise mehr als 10, unerwünscht und in der Regel nicht realisierbar.

In der Monographie „Optical Waves in Crystals" der Autoren A. Yariv, P. Yeh, J. Wiley & Sons, New York, 1984 ist ein Solc-Filter angegeben, welches aus mehreren Verzögerungsplatten, welche auch Halbwellenplatten sein können, und Polarisatoren zusammengesetzt ist. Eine Verwendung als Polarisationstransformator ist hier nicht erwähnt.

Aufgabe der vorliegenden Erfindung ist es, einen Polarisationstransformator anzugeben, bei dem gegenüber dem Stand der Technik bei gegebenem Verstellwinkelbereich die notwendige Gesamtverzögerung und Elementeanzahl von als beschränkt drehbare Wellenplatten arbeitenden Polarisationsstellelementen minimiert werden, bei dem auch kleinere Verstellwinkelbereiche bei ggf. erhöhter, aber wiederum möglichst klein zu haltender Gesamtverzögerung und Elementeanzahl tolerierbar sind. Diese Prinzipien sind auch auf Endlos-Polarisationstransformatoren und redundante Endlos-Polarisationstransformatoren auszudehnen.

Diese Aufgabe wird durch die Polarisationstransformatoren mit den Merkmalen der Ansprüche 1 und 4 gelöst. Weitere Ausgestaltungen ergeben sich aus den abhängigen Ansprüchen.

Erfindungsgemäß eignen sich wenige, vorzugsweise 2 bis 6 gegeneinander drehbare Halbwellenplatten dazu, eine Polarisationsdrehung oder zirkulare Doppelbrechung zu erzeugen. Bei gerader Anzahl dieser Halbwellenplatten ergibt sich zirkulare Doppelbrechung, bei ungerader Anzahl dieser Halbwellenplatten ergibt sich eine ähnliche, damit verwandte Polarisationstransformation oder -drehung.

Ein Ausführungsbeispiel der Erfindung enthält, wie beispielsweise die in IEEE J. Lightwave Techn., 9(1991)10, S. 1353-1366 und in dort genannten Literaturstellen erwähnten Polarisationstransformatoren, Polarisationsstellelemente, welche analog zu Retardern fester Eigenmoden und variabler Verzögerungen arbeiten. Erfindungsgemäß werden diese nicht, wie in IEEE J. Lightwave Techn., 8(1990)3, S. 438-458 beschrieben, stets durch eines, sondern generell durch jeweils so viele kaskadierte drehbare Halbwellenelemente ersetzt wie notwendig, um mit abwechselnd möglichst positivem und möglichst negativem Verstellwinkel die geforderten Polarisationstransformationen mit dem gegebenen Verstellwinkelbereich der einzelnen drehbaren Halbwellenelemente erzeugen zu können. Analog zur Beschreibung in IEEE J. Lightwave Techn., 8(1990)3, S. 438-458, erhält man günstig zu realisierende Anordnungen, wenn zwischen solchen Polarisationsstellelementen oder Gruppen von Halbwellenelementen Viertelwellenelemente eingesetzt werden. Vorzugsweise können für Viertel- und Halbwellenelemente und auch für andere Wellenplatten ferroelektrische Flüssigkristalle eingesetzt werden. Erst die erfindungsgemäße Verwendung von mehr als einem Halbwellenelement in einem Polarisationsstellelement ermöglicht die Verwendung dieser Flüssigkristalle, denn die Verstellwinkel dieser Flüssigkristalle sind relativ klein, wohingegen ihre sonstigen Eigenschaften gegenüber anderen Materialsystemen sehr vorteilhaft sind. Reguläre Polarisationstransformatoren entstehen durch abwechselnde Verwendung von beispielsweise zwei Halbwellenelementen und je einem zwischen zwei Gruppen von Halbwellenelementen liegenden Viertelwellenelement. Je nach gewünschter Funktion sind drei bis fünf oder mehr solche Gruppen und zwei bis vier oder mehr dazwischenliegende Viertelwellenelemente erforderlich. Bei drei Gruppen ist die endlose Transformation von einem bestimmten in einen beliebig variablen Polarisationszustand, bei vier Gruppen die endlose Transformation von einem beliebigen variablen in einen anderen beliebig variablen Polarisationszustand oder die endlose redundante Transformation von einem bestimmten in einen beliebig variablen Polarisationszustand, bei fünf und mehr. Gruppen die endlose redundante Transformation von einem beliebig variablen in einen anderen beliebig variablen Polarisationszustand möglich, oder jeweils umgekehrt. Anordnungen mit reduzierter Elementeanzahl und auch reduzierter optischer Gesamtverzögerung erhält man bei der Beschränkung auf wichtige Spezialfälle, beispielsweise auf die redundante und endlose Transformation eines bestimmten linearen Polarisationszustands in einen beliebigen, endlos variablen, oder umgekehrt. In diesem Fall muß lediglich ein Polarisationsstellelement aus mindestens zwei Halbwellenelementen zusammengesetzt sein, und man benötigt insgesamt sechs bis acht Flüssigkristallelemente.

Eine weiter reduzierte Elementeanzahl erhält man in anderen Ausführungsbeispielen der Erfindung, und zwar dann, wenn der Verstellwinkelbereich der drehbaren Wellenplatten gegenüber einem Mittelwert mindestens $\pm\pi/4$ beträgt.

Die endlose Transformation eines bestimmten linearen in einen beliebigen, endlos variablen Polarisationszustand oder umgekehrt erfordert in diesem Fall lediglich ein Viertelwellenelement, ein Halbwellenelement und zwei weitere Viertelwellenelemente. Die Erweiterung dieser Anordnung auf redundante endlose Polarisationstransformation ist durch zwei weitere vorgeschaltete Viertelwellenelemente möglich.

Transformationen, auch endlose Transformationen zwischen zwei beliebigen Polarisationszuständen können auch dadurch realisiert werden, daß zwei Polarisationstransformatoren zwischen fester und beliebiger Polarisation gespiegelt aneinandergereiht werden. Das regelungstechnische Problem, an einer bestimmten Stelle des so entstehenden Polarisationstransformators eine bestimmte, z.B. horizontale, vertikale oder zirkulare Polarisation zu erzielen, kann dadurch gelöst werden, daß an dieser Stelle entweder ein entsprechend orientierter Polarisator oder mindestens ein in seinem Verstellwinkel moduliertes Halbwellenelement vorgesehen werden.

Es folgt eine genauere Beschreibung erfindungsgemäßer Polarisationstransformatoren anhand der Figuren 1 bis 4.

Figur 1 zeigt einen erfindungsgemäßen Polarisationstransformator im Schema.
Figur 2 zeigt einen Polarisationstransformator mit reduzierter Elementeanzahl und Gesamtverzögerung im Schema.
Figur 3 zeigt einen Polarisationstransformator mit weiter reduzierter Elementeanzahl und Gesamtverzögerung im Schema.
Figur 4 zeigt einen Polarisationstransformator im Schema, der zwei anderen Polarisationstranformatoren enthält.

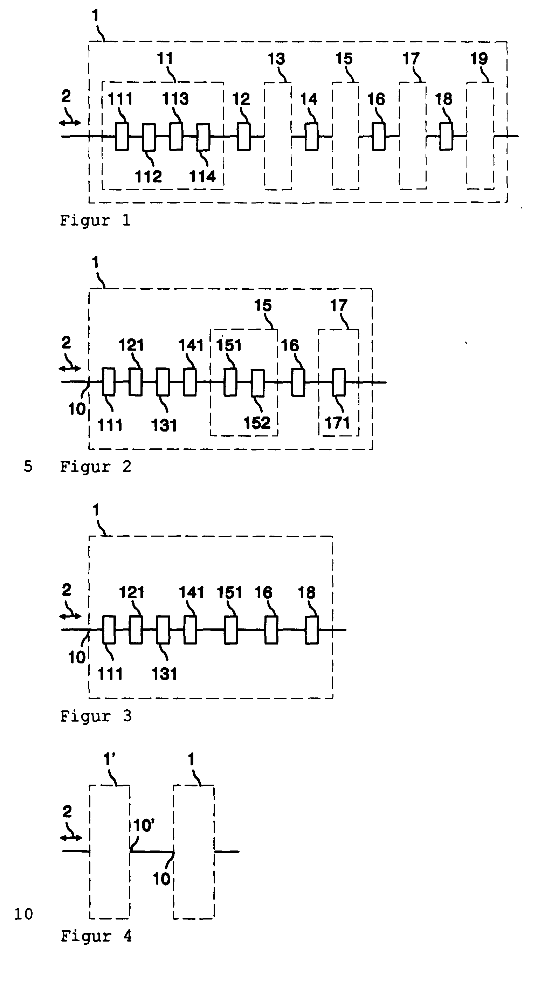

Im Ausführungsbeispiel der Figur 1 durchläuft eine Lichtwelle 2 einen Polarisationstransformator 1, der aus einer Kette von ferroelektrischen Flüssigkristallzellen wenigstens näherungsweise konstanter Verzögerung und variabler Orientierung der Eigenmoden besteht. Die Verstellwinkelbereiche der Eigenmoden seien in diesem Beispiel mindestens $\pm\pi/8$ gegenüber einem Mittelwert. Es sind 5 Polarisationsstellelemente oder Gruppen 11, 13, 15, 17, 19 vorgesehen, die jeweils eine Polarisationsdrehung oder zirkulare Doppelbrechung erzeugen. Zwischen diesen Polarisationsstellelementen ist jeweils ein Viertelwellenelement 12, 14, 16, 18 vorgesehen. Jedes dieser Polarisationsstellelemente oder Gruppen enthält mehrere, hier vier Halbwellenelemente 111, 112, 113, 114. Bei ungerader statt gerader Anzahl dieser Halbwellenelemente ist jeweils noch eine zusätzliche Polarisationstransformation vorhanden, die sich durch Vorzeichenänderungen der Steuersignale anderer Flüssigkristallzellen oder ihre Drehung oder Spiegelungen berücksichtigen lassen.

Maximale zirkulare Doppelbrechung in einer Richtung erhält man dadurch, daß die Verstellwinkel der Halbwellenelemente 111, 113 so positiv wie möglich, die Verstellwinkel der Halbwellenelemente 112, 114 dagegen so negativ wie möglich gemacht werden. Die jeweils anderen Grenzen der Verstellbereiche erzeugen eine maximale zirkulare Doppelbrechung in der entgegengesetzten Richtung. Zwischenwerte der zirkularen Verzögerung ergeben sich durch Zwischenwerte der Verstellwinkel, beispielsweise die Verzögerung Null für den Fall, daß alle Verstellwinkel gleich gewählt sind. Durch Verstellwinkelbereiche von $\pm\pi/8$ bei jedem Element erhält man eine Verzögerung zwischen den zirkularen Eigenmoden eines der Polarisationsstellelemente 11, 13, 15, 17, 19 von $\pm 2\pi$. Dieser Wert errechnet sich aus den Verstellwinkelbereichen $\pm\pi/8$ einzelner Halbwellenelemente 111, 112, 113, 114, multipliziert mit dem festen Faktor 4 und der Anzahl 4 von Halbwellenelementen 111, 112, 113, 114. Bei größerem Verstellwinkelbereich oder kleinerer erforderlicher Verzögerung zwischen den zirkularen Eigenmoden können weniger, bei kleinerem Verstellwinkelbereich oder größerer erforderlicher Verzögerung müssen mehr Halbwellenstellelemente 111, 112, 113, 114 in diesen Polarisationsstellelementen 11, 13, 15, 17, 19 eingesetzt werden.

Mit diesem Polarisationstransformator kann man die in IEEE J. Lightwave Techn., 9(1991)10, S. 1353-1366 angegebenen Polarisationstransformationen dadurch durchführen, daß die Viertelwellenelemente 12, 14, 16, 18 mit konstanten, vorzugsweise in der Mitte eines etwaigen Verstellbereichs, beispielsweise horizontal/vertikal gewählten Eigenmoden, die Polarisationsstellelemente 11, 13, 15, 17, 19 aber wie zirkulare Retarder verstellbarer Verzögerung betrieben werden. Dieses erfolgt durch den Einsatz des Polarisationstransformators 1 als Teil einer Polarisationsregelung. Der Polarisationsregler steuert die Spannungen der Flüssigkristallelemente so, daß die zur Erzielung der gewünschten Polarisationstransformation erforderlichen Verstellwinkel vorliegen.

Zur genaueren Beschreibung wird folgende Terminologie eingeführt: $P_i$ sei die Polarisation am Ausgang der $i$-ten oder Eingang der $i+1$-ten Flüssigkristallzelle. $P_i(\alpha)$ bedeute lineare Polarisation mit Erhebungswinkel $\alpha$ an dieser Stelle.
$F_i(\beta_i+\gamma_i,\delta_i)$ bezeichne die $i$-te Flüssigkristallzelle, deren schneller, linear polarisierter Eigenmodus den Erhebungswinkel $\beta_i+\gamma_i$ gegenüber der Horizontalen besitze, und deren Verzögerung bei der Betriebswellenlänge $\delta_i$ betrage. $\beta_i$ sei eine Konstante, die durch geometrische Orientierung bei Herstellung und Montage und ggf. Eigenschaften des Flüssigkristalls festgelegt ist. Der Verstellwinkel $\gamma_i$ der Eigenmoden sei variabel mit Bereichsmitte 0.

Elementare Vertauschungsoperationen lassen die Äquivalenz von etlichen auf den ersten Blick möglicherweise verschiedenartigen Anordnungen erkennen: In allen Anordnungen ist die axiale Drehung von Polarisationszuständen und Polarisationstransformator um beliebige Winkel zulässig. Die Verstellwinkel dürfen ferner stets durch solche ersetzt werden, die um $\pi$ gedreht sind. Negative Verzögerungen lassen sich durch Drehung einer Zelle positiver Verzögerung gleichen Betrags um den Winkel $\pi/2$ oder den Winkel $-\pi/2$ realisieren, und umgekehrt.

Schließlich darf eine Verzögerung auch stets durch eine um ganzzahlige Vielfache von $2\pi$ größere oder kleinere Verzögerung ersetzt werden.

Das Ausführungsbeispiel der Figur 2 zeigt eine Anordnung 1 mit reduzierter Elementeanzahl und auch reduzierter Gesamtverzögerung. Hier liegt eine Beschränkung auf die endlose Transformation eines bestimmten linearen, an einem Ende 10 der Anordnung 1 auftretenden in einen beliebigen, endlos variablen Polarisationszustand am anderen Ende der Anordnung, oder umgekehrt, vor.

In diesem Fall muß lediglich ein Polarisationsstellelement aus mindestens zwei Halbwellenelementen 151, 152 zusammengesetzt sein.

Die unmittelbarer Nachbildung einer redundante Regelung mit 4 Faserquetschern gemäß IEEE J. Lightwave Techn. 6(1988)7, S. 1199-1207 für konstante lineare Eingangspolarisation und eine variable Polarisation erfordert bei mindestens einem Polarisationsstellelement, dessen Verzögerung um $2\pi$ geändert werden kann, mindestens 8 ferroelektrische Flüssigkristallzellen (= Elemente), beispielsweise die Anordnung

$$P_0(0), F_1(\gamma_1,\pi), F_2(\gamma_2,\pi/2), F_3(\gamma_3,\pi), F_4,(\gamma_4,\pi/2),$$
$$F_5(\gamma_5,\pi), F_6(\gamma_6,\pi), F_7(\gamma_7,\pi/2), F_8(\gamma_8,\pi).$$

Dabei dient Flüssigkristallzelle $F_1$ 111 zur Erzeugung von Polarisationsbewegungen in einer zu $F_3$ 131 orthogonalen Richtung, $F_2$ 121, $F_4$ 141, $F_7$ 16 sind zwischengeschaltete Viertelwellenelemente, die Halbwellenelemente $F_1$ 111, $F_3$ 131, $F_8$ 171 ersetzen Retarder, deren Verzögerung um $\pi$ geändert werden kann - hier ist der Ersatz durch mehr als eine Halbwellenplatte zwar möglich, aber nicht notwendig - und die kombinierte Wirkung der Halbwellenelemente $F_5$ 151, $F_6$ 152 ersetzt ein Polarisationsstellelement 15 mit zirkularen Eigenmoden, dessen Verzögerung zwischen diesen Eigenmoden um $2\pi$, also im Bereich $\pm\pi$ um einen Mittelwert, geändert werden kann. Besonders günstig ist, daß die einzelnen Flüssigkristallzellen alle parallel zueinander und zur wenigstens näherungsweise linearen Polarisation am Ende 10 des Polarisationstransformators 1 montiert werden können, weil alle $\beta_i$ gleich Null sind. Die Winkel $\gamma_2, \gamma_4, \gamma_7$ der Viertelwellenelemente können, aber müssen nicht zu Regelungszwecken verändert werden.

Die Eigenmoden der einzelnen Flüssigkristallzellen müssen sich in diesem Beispiel um mindestens $\pm\pi/8$ verändern lassen, was ohne weiteres erreichbar ist.

Insgesamt werden hier 4 Elemente $F_1$ 111, $F_2$ 121, $F_3$ 131, $F_4$ 141 benötigt, um eine auf einem halben Großkreis der Poincaré-Kugel und - um Redundanz zu erhalten - zumindest an den Endpunkten dieses Halbkreises im Bereich näherungsweise zirkularer Polarisation quer zu diesem variable Polarisation zu erzeugen. Dabei kann links- wie auch rechtszirkulare Polarisation und eine komplette Reihe kontinuerlich dazwischenliegender Polarisationszustände an der Stelle zwischen Elementen $F_4$ 141 und $F_5$ 151 eingestellt werden.

Es ist nun möglich, die hier verwendete Gesamtverzögerung von $3\pi$ und/oder die Anzahl 4 dieser Elemente zu reduzieren. Mögliche Ersatzanordnungen statt $F_1(\gamma_1,\pi),F_2(\gamma_2,\pi/2),F_3(\gamma_3,\pi),F_4(\gamma_4,\pi/2)$ sind beispielsweise

$F_1(\gamma_1,\pi/2),F_2(\gamma_2,-\pi/4),F_3(\gamma_3,\pi),F_4(\gamma_4,\pi/2),$

$F_1(\gamma_1,\pi/2),F_2(\gamma_2,\pi),F_3(\gamma_3,0,6\cdot\pi),$

$F_1(\gamma_1,\pi/2),F_2(\gamma_2,-\pi/4).$

In den beiden letzteren Fällen wird nicht nur die Gesamtverzögerung, sondern auch die Zellenanzahl reduziert. Je weniger Zellen hier verwendet werden, desto stärker müssen i.a. die Winkel verstellbar sein. Für die Konfiguration

$F_1(\gamma_1,\pi/2),F_2(\gamma_2,\pi),F_3(\gamma_3,0,6\cdot\pi)$ könnte z.B. eine Verstellbarkeit von $\pm 1,2\cdot\pi/8$ ausreichend sein, für die Konfiguration $F_1(\gamma_1,\pi/2),F_2(\gamma_2,-\pi/4)$ eine Verstellbarkeit von etwas weniger als $\pm\pi/4$. In der Praxis ist eine etwas größere als die minimal erforderliche Verstellbarkeit in der Regel förderlich. Auch bei Berücksichtigung solcher Reserven ist der im Ausführungsbeispiel erforderliche Verstellwinkelbereich weit kleiner als beim Stande der Technik, wo ja ebenfalls in der Praxis größere als die minimal erforderlichen Verstellwinkelbereiche vorzugsweise vorzusehen sind.

Die genauen Werte der gewählten Verzögerungen wirken sich nicht besonders kritisch auf die Funktion aus, es sind in diesem redundanten Endlos-Polarisationstransformator vielmehr Abweichungen möglich, die desto stärker ausfallen dürfen, je mehr Zellen vorhanden sind und je stärker die Winkel der Zellen verstellbar sind. Beispielsweise kann statt einer Verzögerung $0,6\cdot\pi$, entsprechend einem Dreizehntelwellenelement, eine Verzögerung von $\pi/2$, entsprechend einem Viertelwellenelement, ohne weiteres eingesetzt werden.

Eine nicht redundante Polarisationsregelung erhält man bei Ersatz der Teilanordnung $F_1(\gamma_1,\pi),F_2(\gamma_2,\pi/2),F_3(\gamma_3,\pi),F_4(\gamma_4,\pi/2)$ durch die Viertelwellenzelle $F_4(\gamma_4,\pi/2)$. In diesem Fall sind nur deutlich geringer Abweichungen der Verzögerungen von den angegebenen Werten tolerierbar.

In einem weiteren Ausführungsbeispiel der Erfindung (Figur 3) seien die Verstellwinkelbereiche mindestens $\pm\pi/4$ gegenüber einem Mittelwert, was ebenfalls noch geringer ist als beim Stande der Technik. Auch hier lassen sich noch weitere Vereinfachungen gegenüber dem Stand der Technik angeben, und zwar derart, daß weniger Elemente benötigt werden, die außerdem eine geringere Gesamtverzögerung aufweisen.

Geeignet ist beispielsweise die Konfiguration

$P_2(0),F_3(\gamma_3,\pi/2)F_4(\pi/4+\gamma_4,\pi),F_5(\pi/2+\gamma_5,\pi/2)F_6(\gamma_6,\pi/2)$
.

Die Eingangspolarisation ist horizontal, $P_2(0)$. Im normalen Fall regeln Viertelwellenelement $F_3$ 141 und Halbwellenelement $F_4$ 151, d.h., diese Elemente sind an einen Polarisationsregler angeschlossen. Durch Einstellung von $\gamma_3$, $\gamma_4$ im Bereich $\pm\pi/4$ läßt sich jede gewünschte Polarisation $P_4$ erzeugen. Viertelwellenzellen $F_5$ 16 und $F_6$ 18 kompensieren normalerweise gegenseitig ihre Wirkung, d.h., für die Ausgangspolarisation gilt $P_6=P_4$; dazu wird zunächst $\gamma_6=\gamma_5$ eingestellt. Außerdem ist es zweckmäßig, schon jetzt $\gamma_5=-\gamma_3$ zu wählen.

Falls Halbwellenzelle $F_4$ 151 den Verstellwinkel $\gamma_4=\pm\pi/4$ erreicht, ist $P_5$ horizontal. Zu diesem Zeitpunkt wird $\gamma_3$ auf 0 reduziert; $\gamma_5=-\gamma_3$ wird dabei gleichzeitig nachgeführt - jetzt gilt $\gamma_6\neq\gamma_5$. $P_5$, $P_6$ bleiben dabei unverändert. Nun sind $P_3$, $P_4$ orthogonale zirkulare Polarisationen. Deshalb kann $\gamma_4=\mp\pi/4$ eingestellt werden, ohne daß sich $P_4$, $P_5$, $P_6$ ändern. Schließlich wird der ursprüngliche Wert $\gamma_3$ unter gleichzeitigem Nachführen von $\gamma_5=-\gamma_3$ wieder eingestellt. Damit gilt auch wieder $\gamma_6=\gamma_5$, $P_6=P_4$.

Während des gesamten Vorgangs hat sich $P_6$ nicht verändert. Beim Vergleich zwischen vorher und nachher erscheint lediglich $\gamma_4$ von der einen zur anderen Bereichsgrenze verstellt.

Ein Überschreiten der Bereichsgrenzen $\gamma_3=\pm\pi/4$ läßt sich stets durch Verstellen von $\gamma_4$ um einen Betrag von etwa $\pi/4$ vermeiden.

Damit ist endlose Regelung (= unterbrechungsfreie Nachführung beliebiger Polarisationsänderungen) gewährleistet. Ähnliche Verstellbewegungen sind übrigens auch für andere vorstehend und nachfolgend beschriebene Endlos-Polarisationstransformatoren vorzunehmen.

Unter Beibehaltung des beschriebenen Algorithmus ebenfalls anwendbar - und vorteilhaft, da die Montage der Elemente nur unter den Winkeln 0 oder $\pi/2$ stattfindet - sind die Konfigurationen -

$P_2(0),F_3(\gamma_3,\pi/2),F_4(\gamma_4,\pi),F_5(\pi/2+\gamma_5,-\pi/2),F_6(\gamma_6,-\pi/2),$

$P_2(0),F_3(\gamma_3,\pi/2),F_4(\gamma_4,\pi),F_5(\gamma_5,\pi/2),F_6(\gamma_6,-\pi/2),$

$P_2(0),F_3(\gamma_3,\pi/2),F_4(\gamma_4,\pi),F_5(\gamma_5,\pi/2),F_6(\pi/2+\gamma_6,\pi/2).$

Abweichungen der Eingangspolarisation, der Verzögerung, der eingestellten Eigenmoden, ggf. der Wellenlänge der optischen Welle 2 sowie Toleranz möglichst hoher Polarisationsänderungsgeschwindigkeiten machen es in der Praxis wünschenswert, eine redundante Polarisationsregelung zu implementieren, in der diese Einflüsse im wesentlichen, bei niedriger Polarisationsänderungsgeschwindigkeit sogar vollständig eliminiert werden können.

Redundante Ausführung bei einer variablen Polarisation ist für einen Großteil der technischen Anwendungsfälle geeignet.

Während in der Figur 2 bereits ein Ausführungsbeispiel für den Fall gegeben ist, daß der Verstellwinkelbereich gering ist, beispielsweise zwischen $\pm\pi/8$ und $\pm\pi/4$ liegt, wird hier eine einfachere Anordnung mit geringerer Gesamtverzögerung angegeben, die allerdings minde-

stens $\pm\pi/4$ erreichende Verstellwinkelbereiche benötigt. Eine solche Anordnung ist

$P_0(\mp\pi/4), F_1(\pm\gamma_1, \pm\pi/2), F_2(\pm\pi/4+\gamma_2, \pm\pi/2),$

$F_3(\gamma_3, \pi/2), F_4(\pi/4+\gamma_4, \pi), F_5(\pi/2+\gamma_5, \pi/2), F_6(\gamma_6, \pi/2),$

wobei die wählbaren Vorzeichen unabhängig voneinander wählbar sind. Wählt man jeweils das obere Vorzeichen, ist die Eingangspolarisation ist hier um den Winkel $-\pi/4$ gegenüber der Horizontalen geneigt, $P_0(-\pi/4)$. Der nichtredundanten Anordnung werden die Zellen $F_1$ 111, $F_2$ 121 vorgeschaltet. Für $\gamma_1=0, \gamma_2=0$ ergibt sich wiederum horizontale Polarisation $P_2$.

Durch Variation von $\gamma_1, \gamma_2$ um 0 herum kann $P_2$ in zwei auf der Poincaré-Kugel orthogonalen Richtungen (Erhebungswinkel und Elliptizität) verändert werden, gemäß einem in IEEE J. Lightwave Techn. 6(1988)7, S. 1199-1207 vorgestellten Prinzip.

Deshalb kann auch während der beschriebenen Verstellvorgänge unveränderte Ausgangspolarisation $P_6$ beibehalten, oder zu verändernde Ausgangspolarisation $P_6$ nachverfolgt werden.

Die im Zusammenhang mit Figur 3 oben genannten Alternativkonfigurationen können auch hier anstelle von $F_3(\gamma_3, \pi/2), F_4(\pi/4+\gamma_4, \pi), F_5(\pi/2+\gamma_5; \pi/2), F_6(\gamma_6, \pi/2)$ eingesetzt werden.

Die normalerweise unerwünschte Neigung der Eingangspolarisation $P_0(-\pi/4)$ kann durch axiales Drehen der gesamten Anordnung um den Winkel $\pi/4$ horizontal gemacht werden.

Zur Transformation einer beliebigen in eine lineare Polarisation benötigt man ein Viertelwellenelement und ein Halbwellenelement. Diese können in beliebiger Reihenfolge am Eingang 10 eines Polarisationstransformators 1 nach Figur 2 oder 3 angeschlossen werden.

Ein wichtiger Fall ist die endlose Transformation einer beliebigen in eine andere beliebige Polarisation. Dies ist nicht nur mit einer Anordnung gemäß Figur 1 möglich. Geeignet ist gemäß Figur 4 auch ein Polarisationstransformator 1 gemäß Figur 2 oder 3, der mit einem weiteren, jedoch gespiegelten Polarisationstransformator 1' gemäß Figur 2 oder 3 so zusammengeschaltet wird, daß die beiden Enden 10 und 10' einander zugewandt sind.

In Polarisationstransformatoren kann das Problem entstehen, daß man an einem bestimmten Punkt eine bestimmte Polarisation, beispielsweise beliebig linear, linear horizontal oder zirkular, erhalten möchte, wobei vorauszusetzen ist, daß der Polarisationstransformator an dieser Stelle die entsprechende Polarisation zu erzeugen auch in der Lage ist.

Im Fall linearer Polarisation kann dies dadurch erfolgen, daß man einen entsprechend orientierten linearen Polarisator in den Strahlengang einfügt. Im Fall zirkularer Polarisation kann dies dadurch erfolgen, daß man an der entsprechenden Stelle eines oder mehrere Halbwellenelemente vorsieht und dessen Verstellwinkel moduliert bzw. deren Verstellwinkel in abwechselnd entgegengesetzten Richtungen moduliert. Nur wenn unmittelbar vor diesen Elementen zirkulare Polarisation vorliegt, verändert sich die Polarisation im weiteren Strahlengang nicht aufgrund dieser Verstellwinkelmodulation. Man kann daher die übrigen Elemente dazu heranziehen, nicht nur den gewünschten Polarisationszustand zu erzeugen, sondern auch die Modulation des erzeugten Polarisationszustands durch diese Verstellwinkelmodulationen minimal zu halten, im Idealfall sogar verschwinden zu lassen, so daß das Ziel zirkularer Polarisation an dieser Stelle erreicht wird. Linear horizontale oder zirkulare Polarisation an einer bestimmten Stelle können insbesondere bei Ausführungsbeispielen gemäß Figur 4 gewünscht sein.

Im Fall gewünschter beliebiger linearer Polarisation muß die Modulation des erzeugten Polarisationszustands dagegen maximiert werden; dies ist insbesondere bei einem Ausführungsbeispiel gemäß Figur 1 nützlich.

In allen, besonders aber bei den redundanten Ausführungsbeispielen ist eine eventuell geringfügig variable Verzögerung zwischen den Eigenmoden der Elemente, welche beispielsweise bei einer ferroelektrischen Flüssigkristallzelle als Funktion der angelegten Spannung ohne weiteres auftreten könnte, von untergeordneter Bedeutung. Deshalb müssen beispielsweise Viertel- und Halbwellenelemente nicht unbedingt genau ein Viertel oder die Hälfte einer Wellenlänge als Verzögerung zwischen den beiden Eigenmoden aufweisen.

**Patentansprüche**

1. Polarisationstransformator (1) zur Nachführung oder Erzeugung mindestens eines optischen Polarisationszustandes einer Lichtwelle (2) mit Elementen, welche als Wellenplatten wenigstens näherungsweise konstanter Verzögerung und innerhalb von Verstellwinkelgrenzen einstellbarer Eigenmoden arbeiten,
dadurch gekennzeichnet, daß
zwei oder mehr Halbwellenelemente (111, 112, 113, 114, 151, 152) in mindestens einer Gruppe (11, 13, 15, 17, 19), von denen jede mindestens ein Halbwellenelement umfaßt, unmittelbar aufeinander folgen, daß bei unmittelbar aufeinander folgenden Halbwellenelementen die Verstellwinkel in abwechselnd entgegengesetzten Richtungen eingestellt werden können.

2. Polarisationstransformator nach Anspruch 1, in dem zwischen Gruppen (11, 13, 15, 17, 19), welche jeweils eines oder mehrere unmittelbar aufeinanderfolgende Halbwellenelemente (111, 112, 113, 114) enthalten, Viertelwellenelemente (12, 14, 16, 18) vorgesehen sind.

3. Polarisationstransformator nach Anspruch 1 oder 2, in dem zwei Halbwellenelemente (151, 152), ein Viertelwellenelement (16) und ein Halbwellenelement (171) aufeinander folgen.

4. Polarisationstransformator (1) zur Nachführung oder Erzeugung mindestens eines optischen Polarisationszustandes einer Lichtwelle (2) mit Elementen, welche als Wellenplatten wenigstens näherungsweise konstanter Verzögerung und innerhalb von Verstellwinkelgrenzen einstellbarer Eigenmoden arbeiten,
dadurch gekennzeichnet, daß
ein erstes Halbwellenelement (151) und zwei Viertelwellenelemente (16, 18) aufeinander folgen.

5. Polarisationstransformator nach Anspruch 3 oder 4,
in dem ein zwischen rechts- und linkszirkularer Polarisation kontinuierlich variabler Polarisationszustand an der nicht einem Viertelwellenelement (16) zugewandten Seite eines ersten Halbwellenelements (151) eingestellt werden kann.

6. Polarisationstransformator nach Anspruch 5,
in dem an der nicht einem Viertelwellenelement (16) zugewandten Seite eines ersten Halbwellenelements (151) ein weiteres Viertelwellenelement (141) vorgesehen ist.

7. Polarisationstransformator nach Anspruch 6,
in dem an der nicht einem Viertelwellenelement (16) zugewandten Seite eines weiteren Viertelwellenelements (141) ein weiteres Halbwellenelement (131) vorgesehen ist.

8. Polarisationstransformator nach Anspruch 6 oder 7,
in dem an der nicht einem Viertelwellenelement (16) zugewandten Seite eines weiteren Viertelwellenelements (141) oder eines weiteren Halbwellenelements (131) ein zusätzliches Viertelwellenelement (121) vorgesehen ist.

9. Polarisationstransformator nach Anspruch 8,
in dem an der nicht einem Viertelwellenelement (16) zugewandten Seite eines zusätzlichen Viertelwellenelements (121) ein zusätzliches Halbwellenelement (111) vorgesehen ist.

10. Polarisationstransformator nach Anspruch 8,
in dem an der nicht einem Viertelwellenelement (16) zugewandten Seite eines zusätzlichen Viertelwellenelements (121) ein anschließendes Viertelwellenelement (111) vorgesehen ist.

11. Polarisationstransformator nach Anspruch 5,
in dem an der nicht einem Viertelwellenelement (16) zugewandten Seite eines ersten Halbwellenelements (151) ein Dreizehntelwellenelement (141), ein Halbwellenelement (131) und ein Viertelwellenelement (121) vorgesehen sind.

12. Polarisationstransformator nach Anspruch 5,
in dem an der nicht einem Viertelwellenelement (16) zugewandten Seite eines ersten Halbwellenelements (151) ein Achtelwellenelement (141) und ein Viertelwellenelement (121) vorgesehen sind.

13. Polarisationstransformator nach Anspruch 6, 7, 9, 10, 11 oder 12,
in dem an einem bei Bewegung von einem Viertelwellenelement (16) über ein erstes Halbwellenelement (151) zu einem Ende (10) des Polarisationstransformators (1) an diesem Ende (10) wenigstens näherungsweise konstante näherungsweise lineare Polarisation auftreten kann.

14. Polarisationstransformator nach einem der vorstehenden Ansprüche,
in dem mindestens eines der Elemente eine ferroelektrische Flüssigkristallzelle ist.

15. Anordnung nach einem der vorstehenden Ansprüche,
in der neben einem ersten Polarisationstransformator (1) mit einem bestimmten Ende (10) ein weiterer Polarisationstransformator (1') vorgesehen ist, und zwar so, daß das bestimmte Ende (10') des weiteren Polarisationstransformators (1') dem bestimmten Ende (10) des ersten Polarisationstransformators (1) zugewandt ist.

Figur 1

Figur 2

Figur 3

Figur 4